# EUROPÄISCHE PATENTSCHRIFT

(11) **EP 2 916 112 B1**
(45) Veröffentlichungstag und Bekanntmachung des Hinweises auf die Patenterteilung: **17.02.2016**
(21) Anmeldenummer: 14157791.6
(22) Anmeldetag: 05.03.2014
(51) Int. Cl.: G01F 23/288, G01T 1/20

(54) **Radiometrische Messanordnung**
Radiometric measuring assembly
Dispositif de mesure radiométrique

(43) Veröffentlichungstag der Anmeldung: 09.09.2015
(73) Patentinhaber: VEGA Grieshaber KG, 77709 Wolfach (DE)
(72) Erfinder: Arnold, Thomas, 72275 Alpirsbach (DE); Becherer, Frank, 77743 Neuried (DE)
(74) Vertreter: Westphal, Mussgnug & Partner Patentanwälte mbB

(56) Entgegenhaltungen:
- DE-A1- 3 743 353
- US-A- 3 005 101
- US-A- 3 049 620

## Beschreibung

Die vorliegende Erfindung betrifft eine radiometrische Messanordnung gemäß dem Oberbegriff des Patentanspruchs 1 sowie eine flexible Kühlvorrichtung gemäß dem Oberbegriff des Patentanspruchs 14.

Aus dem Stand der Technik sind verschiedene radiometrische Messanordnungen zur Füllstand-, Dichte- und Grenzstandmessung bekannt, wobei zur Messung eine radioaktive Strahlenquelle und eine Erfassungseinrichtung an gegenüberliegenden Seiten eines zu überwachenden Behälters oder Bereichs angeordnet werden. Von der radioaktiven Strahlenquelle wird Gammastrahlung durch den Behälter in Richtung der Erfassungseinrichtung ausgesendet und auf ihrem Weg durch das Füllgut je nach Füllstand und Dichte des Füllgutes mehr oder weniger absorbiert. Auf Basis der von der Erfassungseinrichtung detektierten Strahlungsstärke kann dann ein Rückschluss auf den Füllstand oder die Dichte eines zwischen der Strahlenquelle und der Erfassungseinrichtung befindlichen Füllgutes gezogen werden. Ebenso ist eine Grenzstanderfassung möglich.

Beispielsweise bei der Füllstandmessung ist eine von der Erfassungseinrichtung erfasste Strahlungsstärke indirekt proportional zu einem Füllstand in dem Behälter, so dass eine Füllstandmessung hoher Güte möglich ist.

Ein besonderer Vorteil der radiometrischen Füllstandmessung ist, dass die für die Messung notwendigen Komponenten, nämlich die Strahlenquelle und die Erfassungseinrichtung, außerhalb eines Behälters anordenbar sind und damit weder die Prozessbedingungen innerhalb des Behälters noch die Eigenschaften des Füllgutes Auswirkungen auf die Einsetzbarkeit dieser Messmethode haben.

Bei den aus dem Stand der Technik bekannten radiometrischen Messanordnungen ist es bekannt, dass die Erfassungseinrichtung als Szintillator mit einem nachgeschalteten Photomultiplier als photosensitives Element ausgestaltet ist. Die auf das Szintillatormaterial treffende Gammastrahlung regt dieses durch Stoßprozesse an, wobei das Szintillatormaterial unter Abgabe von Licht in seinen Ausgangszustand zurückkehrt. Durch eine Messung der Lichtmenge, die beispielsweise über den Photomultiplier und eine nachgeschaltete Messelektronik erfolgt, kann dann auf die Intensität der eintreffenden Strahlung und somit, wie oben angegeben, beispielsweise auf einen Füllstand innerhalb des Behälters geschlossen werden. Insbesondere organische Szintillatormaterialien, beispielsweise polymere Festkörper, sind jedoch äußerst temperaturempfindlich und dürfen daher nicht oberhalb einer bestimmten Grenztemperatur gelagert oder betrieben werden. Bei Polystyren als Szintillatormaterial liegt diese Grenztemperatur beispielsweise bei +50° C.

Aus den oben genannten Szintillatormaterialien kann beispielsweise ein langgestrecktes Szintillator in Form eines Faserbündels gebildet sein, der dann den Vorteil aufweist, dass dieser an verschiedene Behälterformen angepasst werden kann. Insbesondere kann beispielsweise ein solcher Szintillator an der Außenwandung eines beispielsweise rund ausgestalteten Tanks angeordnet werden, was im Stand der Technik zur Erzielung einer kompakten Bauform der Messanordnung sehr geschätzt wird. Ein besonderer Vorteil liegt insbesondere darin, dass aufgrund der Flexibilität des Szintillators auch für den Einsatz eine hohe Flexibilität besteht und die Produktion einer Vielzahl verschieden ausgestalteter, beispielsweise an unterschiedliche Tankformen angepasster Szintillatoren vermieden werden kann.

Als Nachteil wird jedoch die aufgrund der Umgebungsbedingungen, insbesondere der Temperatur, eingeschränkte Einsatzfähigkeit solcher Szintillatoren empfunden.

Aus der US 3 049 620 A ist eine Erfassungseinrichtung für Spektroskopie mit Gammastrahlungen, die eine Neutronenquelle, einen Kristall als Szintillator, eine Detektoreinheit und eine Messelektronik umfasst, bekannt. Der Kristall befindet sich in einem mit einem verflüssigten Gas gefüllten Glaskolben, der die Temperatur des Kristalls niedrig genug hält.

Aus der US 3 005 101 A ist eine weitere radiometrische Messanordnung mit einem quaderförmigen Szintillatorkristall bekannt.

Hier setzt die vorliegende Erfindung an.

Es ist die Aufgabe der vorliegenden Erfindung eine radiometrische Messanordnung mit einem langgestreckten, flexiblen Szintillator derart weiterzubilden, dass diese unabhängig von den herrschenden Umgebungsbedingungen eingesetzt werden kann, ohne auf die bisherigen Vorteile zu verzichten.

Diese Aufgabe wird durch eine radiometrische Messanordnung mit den Merkmal des Patentanspruchs 1 gelöst.

Eine erfindungsgemäße radiometrische Messanordnung weist wenigstens eine radioaktive Strahlungsquelle und eine Erfassungseinheit zur Detektion radioaktiver Strahlung auf, wobei die Erfassungseinheit einen im Wesentlichen zylindrischen, mit einer deutlich größeren Erstreckung in einer Axialrichtung A als in einer Radialrichtung ausgebildeten Szintillator zur Erzeugung strahlungsinduzierte Lichtblitze, ein photosensitives Element zur Erzeugung eines elektrischen Signals auf Basis der Lichtblitze und eine Messelektronik zur Verarbeitung der elektronischen Signale aufweist. Außerdem ist dem Szintillator eine flexible Kühlvorrichtung zugeordnet, die den Szintillator in Axialrichtung wenigstens abschnittsweise und radial umfasst und geeignet ausgebildet ist, ein Kühlmittel zu führen. Die erfindungsgemäße Messanordnung zeichnet sich dadurch aus, dass die Kühlvorrichtung wenigstens einen ersten Schlauch umfasst, wobei das Kühlmittel zwischen einem Außenmantel des Szintillators und einer Innenwandung des ersten Schlauches geführt ist.

Durch eine derartige flexible Kühlvorrichtung wird erreicht, dass der Szintillator einerseits in einem deutlich größeren Temperaturbereich einsetzbar ist und andererseits die aus dem Stand der Technik geschützte Eigenschaft der flexiblen Anbringung nicht verliert. Durch die Verwendung eines Schlauches als Komponente der Kühlvorrichtung wird erreicht, dass mit einem verfügbaren Standardbauteil eine Kühlvorrichtung gebildet werden kann. Die Verwendung von Standardbauteilen wirkt sich dabei insbesondere positiv auf die Herstellungskosten aus, da Sonderanfertigungen vermieden werden können.
Um die im Stand der Technik vorhandenen bereits im Einsatz befindlichen Szintillatoren der oben genannten Art auch für höhere Temperaturen einsetzen zu können, ist eine Kühlvorrichtung mit den Merkmalen des Patentanspruchs 14 ebenfalls Gegenstand der vorliegenden Erfindung.

Der Schlauch kann dazu beispielsweise als Wellenschlauch ausgebildet sein.

Durch die Verwendung eines Wellenschlauches als Komponente der Kühlvorrichtung wird erreicht, dass eine hinreichende Stabilität erreicht wird. Ein Wellenschlauch bietet neben der Stabilität, die den Szintillator beispielsweise vor Quetschungen und Stößen schützen kann auch die notwendige Flexibilität, um eine Anpassbarkeit an verschiedene Außenkonturen von Behältern zu erhalten.

Um eine Ausdehnung des Wellenschlauches in Axialrichtung bei Druckbeaufschlagung mit einem Kühlmittel zu verhindern, kann dieser außerdem mit einem zweiten Schlauch, bevorzugt einem Gewebeschlauch überzogen sein. Das Vorsehen eines solchen zweiten Schlauches, insbesondere eine Stahlgewebeschlauches, verhindert eine Ausdehnung in Axialrichtung, so dass dadurch eventuell entstehende Kräfte auf den Szintillator verhindert werden können.

Um einen vereinfachten Anschluss der vorliegenden Anordnung an eine Kühlmittelversorgung zu erreichen, weist die Kühleinrichtung bevorzugt ein erstes Endstück mit einem Kühlmittelanschluss auf, wobei das erste Endstück vorzugsweise mit dem ersten Schlauch verklebt, verschraubt oder verschweißt ist.

Durch das Vorsehen eines solchen ersten Endstückes, das mit dem ersten Schlauch beispielsweise verklebt oder verschweißt ist, wird die Möglichkeit eines definierten Kühlmittelanschlusses geschaffen. Dieser kann beispielsweise in Radialrichtung oder in Axialrichtung orientiert sein.

Das Endstück kann beispielsweise topfförmig ausgebildet sein sodass es den Szintillator endseitig umschließt. Es kann ferner einen beispielsweise in Axialrichtung oder Radialrichtung angeordneten Kühlmittelanschluss aufweisen.

Zur Vermeidung der Notwendigkeit einer endseitigen Abdichtung des Szintillators gegen das Kühlmittel kann es alternativ sinnvoll sein, wenn das erste Endstück den Szintillator umfänglich umgibt und mit einer dichtenden Klemmanordnung an dem Szintillator befestigbar ist.

Durch eine entsprechende Anordnung wird einerseits erreicht, dass eine entsprechende Kühlvorrichtung bei Bedarf abschnittsweise an einem Szintillator angeordnet werden kann und insbesondere auch bereits im Stand der Technik vorhandene Szintillatoren mit einer entsprechenden Kühlvorrichtung nachgerüstet werden können.

Eine entsprechende Klemmanordnung kann beispielsweise hülsenförmig ausgebildet sein und an einem von dem ersten Schlauch wegorientierten Ende eine umlaufende Innenfase und ein Dichtelement aufweisen, dass mit der Innenfase und einem Endelement derart zusammenwirkt, dass es die Klemmanordnung in Axialrichtung fixiert und zu dem Szintillator hin abdichtet.

Das Endelement kann dazu beispielsweise als eine Überwurfmutter ausgebildet sein, die mit einer geeigneten Befestigungsanordnung, beispielsweise einem Bajonettverschluss oder einem Gewinde an dem Endstück, bevorzugt lösbar, befestigbar ist. Durch das Endelement bzw. die Überwurfmutter wird das Dichtelement in Axialrichtung kraftbeaufschlagt, so dass aufgrund der umlaufenden Innenfase eine Kompression in Radialrichtung auftritt, die eine Verklemmung des Dichtelements an dem Szintillator bzw. dessen Außenmantel bewirkt. Die Kühlvorrichtung ist damit einfach an dem Szintillator befestigbar und kann insbesondere besonders einfach nachträglich daran angeordnet werden.

Die Kühlvorrichtung weist bevorzugt außerdem ein zweites Endstück auf, das bevorzugt mit dem ersten Schlauch verbunden und insbesondere mit einer Gehäusekühlung eines Gehäuses, in dem vorzugsweise das photosensitive Element und/oder die Messelektronik angeordnet sind, verbindbar ist. Mit einem entsprechenden Endstück wird erreicht, dass durch eine Verbindung mit der Gehäusekühlung des Gehäuses, die bereits vorgesehen sein kann, ein einziger Kühlkreislauf geschaffen werden kann, und somit zusätzliche Kühlmittelleitungen vermieden werden können, so dass bevorzugt die Gehäusekühlung und die Kühleinrichtung einen einzigen Kühlkreislauf darstellen.

Alternativ kann die Kühleinrichtung ein zweites Endstück aufweisen, das den gleichen Aufbau wie das erste Endstück aufweist und somit eine flexible Anordnung an dem Szintillator beziehungsweise dessen Außenmantel ermöglicht. Insbesondere kann das zweite Endstück ebenfalls eine Klemmanordnung aufweisen.

Um eine möglichst vollständige Kühlung des Szintillators zu erreichen, kann an dem zweiten Endstück ferner eine Verbindungsanordnung vorgesehen sein, mittels derer es mit einem Gehäuse der Messanordnung oder einer Gehäusekühlung verbindbar ist. Durch die Verbindungsanordnung wird erreicht, dass ein Ende der Kühleinrichtung mit dem Gehäuse verbindbar ist und damit eine Kühlung zu einem Punkt hin, an dem der Szintillator in das Gehäuse eintritt, gewährleistet ist.

Die Verbindungsanordnung kann dafür beispielsweise an der Überwurfmutter angeordnet sein. Beispielsweise kann eine umlaufende Nut vorgesehen sein, in die eine Spannvorrichtung, beispielsweise durch eine Mehrzahl von Spannbacken eingreifen, die die Überwurfmutter mit dem Gehäuse verspannen.

Um die Nachrüstbarkeit bereits vorhandenen Szintillatoren zu gewährleisten ist außerdem eine flexible Kühleinrichtung für eine radiometrische Messanordnung mit einem im Wesentlichen zylindrischen Szintillator mit einer deutlich größeren Erstreckung in einer Axialrichtung als in einer Radialrichtung, welche den Szintillator wenigstens abschnittsweise radial umfasst und geeignet ausgebildet ist, ein Kühlmittel zu führen, Gegenstand der vorliegenden Erfindung, wobei die Kühlvorrichtung wenigstens einen ersten Schlauch umfasst, wobei das Kühlmittel zwischen einem Außenmantel des Szintillators und einer Innenwandung des ersten Schlauches geführt ist.

Die vorliegende Erfindung wird nachfolgend unter Bezugnahme auf die beigefügten Figuren eingehend erläutert. Es zeigen:
- Figur 1: eine radiometrische Messanordnung, und
- Figur 2: eine Detailvergrößerung aus Figur 1.

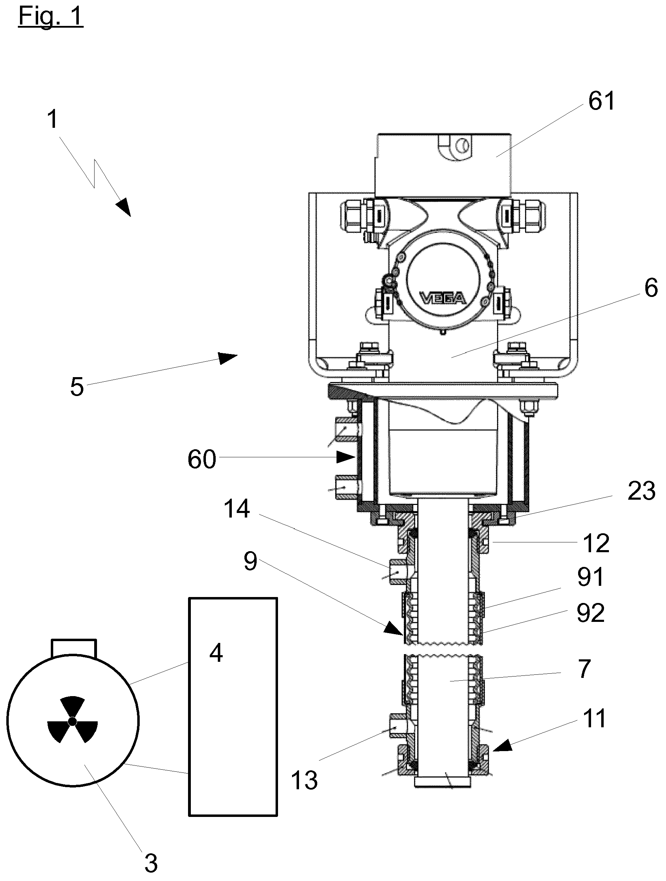

Figur 1 zeigt ein Ausführungsbeispiel einer radiometrischen Messanordnung 1 mit einer Strahlungsquelle 3 und einer Erfassungseinheit 5, wobei zwischen der Strahlungsquelle 3 und der Erfassungseinheit 5 ein Behälter 4 angeordnet ist. Sowohl die Strahlungsquelle 3 als auch der Behälter 4 sind im vorliegenden Ausführungsbeispiel lediglich schematisch dargestellt um die Funktionsweise der vorliegenden radiometrischen Messanordnung 1 zu verdeutlichen.

Im vorliegenden Ausführungsbeispiel sendet die radioaktive Strahlungsquelle 3 radioaktive Strahlungen in Form von Gammastrahlung durch den Behälter 4 in Richtung der Erfassungseinheit 5 aus. Im Bereich der Erfassungseinheit 5 trifft die Gammastrahlung auf einen Szintillator 7, der durch die eintreffende Gammastrahlung angeregt wird unter Abgabe von Licht in seinen Ausgangszustand zurückkehrt. In dem Szintillator 7 der im vorliegenden Ausführungsbeispiel langgestreckt, d. h. mit einer deutlich größeren Erstreckungen in Axialrichtung A als in Radialrichtung ausgebildet ist, werden die durch die Gammastrahlung erzeugten Lichtblitze weitergeleitet und einem photosensitiven Element zur Erzeugung eines elektrischen Signals auf Basis der Lichtblitze zugeführt. Dem photosensitiven Elemente ist eine Messelektronik zur Verarbeitung des zu erzeugten elektrischen Signals nachgeordnet, so dass ausgangsseitig beispielsweise ein Füllstandsignal abgreifbar ist. Sowohl das photosensitive Element als auch die Messelektronik ist in dem vorliegenden Ausführungsbeispiel nicht näher dargestellt und in einem Gehäuse 6, in dem der Szintillator 7 mündet, untergebracht.

Der Szintillator 7 ist im vorliegenden Ausführungsbeispiel als flexibles Faserbündel ausgebildet, das im Wesentlichen zylindrische Form aufweist, wobei der Szintillator 7 typischerweise eine Länge von zwischen 2 und 10 Meter und einen Durchmesser von etwa 3 bis 10 cm aufweist. Zur Kühlung des Szintillators 7 ist im vorliegenden Ausführungsbeispiel außerdem eine Kühlvorrichtung 9 vorgesehen, die den Szintillator 7 radial umfasst. Die Kühlvorrichtung 9 weist in dem gezeigten Ausführungsbeispiel einen ersten Schlauch 91 auf, der als Wellenschlauch ausgebildet und von einem zweiten Schlauch 92, der als Gewebeschlauch ausgebildet ist, umgeben ist. Der Wellenschlauch 91 gewährleistet einerseits die notwendige Dichtigkeit zur Führung eines Kühlmittels und andererseits die notwendige Flexibilität um den Szintillator 7 weiterhin an verschiedene Gehäusekonturen anpassen zu können. Ferner wird durch den Wellenschlauch 91 eine mechanische Stabilität in Radialrichtung erreicht, die den Szintillator 7 vor Quetschungen und Stößen zusätzlich schützt.

Durch den Gewebeschlauch 92, der im vorliegenden Ausführungsbeispiel aus einem Stahlgewebe gebildet ist und den Wellenschlauch 91 außenseitig umfasst, wird in Zusammenwirkung mit einer Fixierung an endseitig an den Schläuchen 91, 92 vorgesehenen Endstücken 13, 14 eine Ausdehnung in Axialrichtung A verhindert.

Die in Figur 1 gezeigte Kühlvorrichtung 9 weist an einem dem Gehäuse 6 abgewandten Ende des Szintillators 7 ein erstes Endstück 11 auf, das im Wesentlichen hülsenförmig ausgebildet ist. Das erste Endstück 11 ist sowohl mit dem Wellenschlauch 91 als auch mit dem Gewebeschlauch 92 verbunden. Eine entsprechende Verbindung kann beispielsweise durch Verschweißen, Verkleben oder andere geeignete Verbindungsmethoden, die insbesondere eine Dichtigkeit gewährleisten hergestellt werden. Das erste Endstück 11 weist außerdem einen in Radialrichtung angeordneten ersten Kühlmittelanschluss 13 in Form eines Anschlussstutzens auf, so dass eine Kühlmittelversorgung mit der Kühlvorrichtung 9 verbunden werden kann.

Das zweite Endstück 12, das an dem Gehäuse 6 zugewandten Ende der Kühlvorrichtung 9 angeordnet ist, ist ebenfalls mit dem Wellenschlauch 91 und dem Gewebeschlauch 92 verbunden und weist einen zweiten Kühlmittelanschluss 14, der ebenfalls in Radialrichtung ausgerichtet ist auf. Das zweite Endstück 12 ist außerdem mit einer Gehäusekühlung 60 verschraubt, so dass eine mechanische feste Axialverbindung des zweiten Endstücks 12 mit der Gehäusekühlung 60 bzw. dem Gehäuse 6 erreicht wird.

Alternativ zu dem zweiten Kühlmittelanschluss 14 kann eine Fluidverbindung zu der Gehäusekühlung 60 vorgesehen sein, so dass die Gehäusekühlung 60 und die Kühlvorrichtungen 9 einen einzigen Kühlkreislauf bilden. Weiterhin kann alternativ oder zusätzlich eine Verbindung zu einer Deckelkühlung 61 des Gehäuses vorgesehen sein, so dass die Deckelkühlung 61, die Gehäusekühlung 60 und die Kühlvorrichtung 9 einen einzigen Kühlkreislauf bilden.

Die in Figur 1 gezeigten Ausführungsbeispiel weist die Gehäusekühlung 60 zwei separate Kühlmittelanschlüsse, wobei aber durch eine geeignete Verbindung der Kühlvorrichtung 9 mit der Gehäusekühlung 60 auch ein einziger Kühlkreislauf für das Gehäuse 6 und der Szintillator 7 gebildet werden kann.

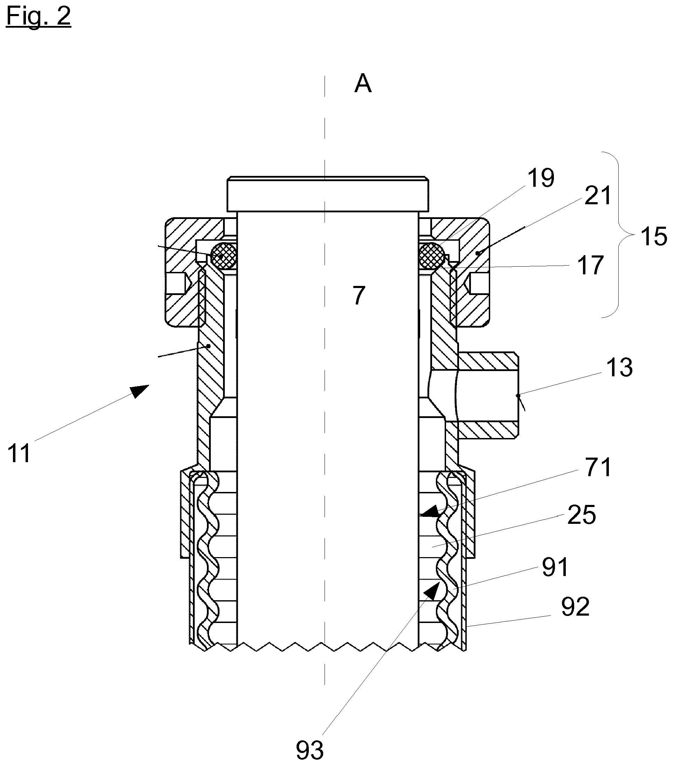

In Figur 2 ist eine vergrößerte Darstellung des ersten Endstücks 11 aus Figur 1 gezeigt. Die Ausgestaltungsmerkmale dieses ersten Endstücks 11 lassen sich entsprechend auf das zweite Endstück 12 übertragen, so dass auf eine separate Abbildung vorliegend verzichtet wird.

Das erste Endstück 11 ist, wie bereits erwähnt, im Wesentlichen hülsenförmig ausgebildet und umgreift den Szintillator 7 radial. In Figur 2 ist besonders gut zu erkennen, dass der erste Kühlmittelanschluss 13 in Form eines Anschlussstutzens sich in Radialrichtung von dem ersten Endstück 11 wegerstreckt und eine Fluidverbindung von dem ersten Kühlmittelanschluss 13 zu einem Hohlraum 25, der sich zwischen einem Außenmantel 71 des Szintillators 7 und einer Innenwandung 93 des Wellenschlauches 91 erstreckt, herstellt. Der Wellenschlauch 91 und der Gewebeschlauch 92 sind im vorliegenden Ausführungsbeispiel mit dem ersten Endstück 11 beispielsweise verklebt oder verschweißt. Ausschlaggebend ist in diesem Fall insbesondere, dass eine mediendichte Verbindung zwischen dem ersten Endstück 11 und dem Wellenschlauch 91 gebildet ist und so ein Austreten von Kühlmittel verhindert werden kann.

Das erste Endstück 11 ist ferner mittels einer Klemmanordnung 15 an dem Szintillator 7 abdichtend gehaltert. Die Klemmanordnung 15 ist im Wesentlichen durch das Zusammenwirken einer an dem ersten Endstück 11 vorgesehenen Innenfase 17 mit einem an dieser Innenfase 17 anliegenden umlaufend angeordneten Dichtelement 19 mit einer Überwurfmutter 21 gebildet. Für die Überwurfmutter 21 beispielsweise mit einem Innengewinde auf das hülsenförmig ausgebildete erste Endstück 11 aufgeschraubt und drückt dabei das Dichtelement 19 in Axialrichtung A, so läuft dieses an der umlaufenden Innenfase 15 an und wird dadurch in Radialrichtung komprimiert. Auf diese Weise entsteht eine Klemmenwirkung zwischen dem Dichtelement 19 und dem Außenmantel 71 des Szintillators 7 so dass neben der Klemmwirkung auch eine Dichtwirkung erzielt wird.

Durch die Ummantelung des Wellenschlauchs 91 mit dem Gewebeschlauch 92 wird außerdem eine Ausdehnung des Wellenschlauches 91 in Axialrichtung A aufgrund einer Druckbeaufschlagung mit dem Kühlmedium verhindert, so dass eine Kraftwirkung auf den Szintillator 7 in Axialrichtung A vermieden werden kann.

### Bezugszeichenliste

- 1: Radiometrische Messanordnung
- 3: Strahlungsquelle
- 4: Behälter
- 5: Erfassungseinheit
- 6: Gehäuse
- 7: Szintillator
- 9: Kühlvorrichtung

- 11: erstes Endstück
- 12: zweites Endstück
- 13: erster Kühlmittelanschluss
- 14: zweiter Kühlmittelanschluss
- 15: Klemmanordnung
- 17: Innenfase
- 19: Dichtelement

- 21: Endelement/Überwurfmutter
- 23: Verbindungsanordnung
- 25: Hohlraum

- 60: Gehäusekühlung
- 61: Deckelkühlung

- 71: Außenmantel

- 91: Erster Schlauch/Wellenschlauch
- 92: Zweiter Schlauch/Gewebeschlauch
- 93: Innenwandung

- A: Axialrichtung

## Patentansprüche

1. Radiometrische Messanordnung (1) mit wenigstens einer Strahlungsquelle (3) und einer Erfassungseinheit (5) zur Detektion radioaktiver Strahlung mit einem im Wesentlichen zylindrischen Szintillator (7) mit einer deutlich größeren Erstreckung in einer Axialrichtung (A) als in einer Radialrichtung, zur Erzeugung strahlungsinduzierter Lichtblitze, einem photosensitiven Element zur Erzeugung eines elektrischen Signals auf Basis der Lichtblitze, einer Messelektronik zur Verarbeitung des elektrischen Signals und einer dem Szintillator (7) zugeordneten flexiblen Kühlvorrichtung (9), die den Szintillator (7) axial wenigstens abschnittsweise und radial umfasst und geeignet ausgebildet ist, ein Kühlmittel zu führen, **dadurch gekennzeichnet, dass** die Kühlvorrichtung (9) wenigstens einen ersten Schlauch (91) umfasst und das Kühlmittel zwischen einem Außenmantel (71) des Szintillators (7) und einer Innenwandung (93) des ersten Schlauches (91) geführt ist.

2. Radiometrische Messanordnung (1) gemäß Anspruch 1,
**dadurch gekennzeichnet dass** der erste Schlauch (91) als Wellenschlauch ausgebildet ist.

3. Radiometrische Messanordnung (1) gemäß Anspruch 2,
**dadurch gekennzeichnet dass** der Wellenschlauch (91) mit einem zweiten Schlauch (92), bevorzugt einem Gewebeschlauch überzogen ist.

4. Radiometrische Messanordnung (1) gemäß einem der vorhergehenden Patentansprüche,
**dadurch gekennzeichnet, dass** die Kühlvorrichtung(9) ein erstes Endstück (11) mit einem ersten Kühlmittelanschluss (13) aufweist.

5. Radiometrische Messanordnung (1) gemäß Anspruch 4,
**dadurch gekennzeichnet, dass** das erste Endstück (11) mit dem ersten Schlauch (91) verklebt, verschraubt oder verschweißt ist.

6. Radiometrische Messanordnung (1) gemäß Anspruch 4 oder 5,
**dadurch gekennzeichnet dass** das erste Endstück (11) den Szintillator (7) umfänglich umgibt und mit einer dichtenden Klemmanordnung (15) an dem Szintillator (7) befestigbar ist.

7. Radiometrische Messanordnung (1) gemäß Anspruch 6,
**dadurch gekennzeichnet dass** die Klemmanordnung (15) hülsenförmig ausgebildet ist und an einem von dem ersten Schlauch (91) wegorientierten Ende eine umlaufende Innenfase (17) und ein Dichtelement (19) aufweist, das mit der Innenfase (17) und einem Endelement (21) derart zusammenwirkt, dass es die Klemmanordnung (15) in Axialrichtung (A) fixiert und zu dem Szintillator (7) hin abdichtet.

8. Radiometrische Messanordnung (1) gemäß Anspruch 7,
**dadurch gekennzeichnet, dass** das Endelement (21) als Überwurfmutter ausgebildet ist.

9. Radiometrische Messanordnung (1) gemäß einem der Ansprüche 4 bis 8,
**dadurch gekennzeichnet, dass** die Kühlvorrichtung (9) ein zweites Endstück (12) aufweist, das mit einer Gehäusekühlung (60) und/oder einer Deckelkühlung (61) eines Gehäuses (6), in dem vorzugsweise das photosensitive Element und/oder die Messelektronik angeordnet sind, verbindbar ist.

10. Radiometrische Messanordnung (1) gemäß Anspruch 9,
**dadurch gekennzeichnet, dass** das zweite Endstück (12) mit dem Gehäuse(6) derart verbunden ist, dass die Gehäusekühlung (60) und/oder die Deckelkühlung (61) und die Kühlvorrichtung (9) einen einzigen Kühlkreislauf ausbilden.

11. Radiometrische Messanordnung (1) gemäß einem der Ansprüche 4 bis 8,
**dadurch gekennzeichnet, dass** die Kühlevorrichtung (9) ein zweites Endstück (12) aufweist, da den gleichen Aufbau wie das erste Endstück (11) aufweist.

12. Radiometrische Messanordnung (1) gemäß Anspruch 11,
**dadurch gekennzeichnet, dass** das zweite Endstück (12) außerdem eine Verbindungsanordnung (23) aufweist, mittels derer es mit dem Gehäuse (6) der Messanordnung (1) oder der Gehäusekühlung (60) verbindbar ist.

13. Radiometrische Messanordnung (1) gemäß Anspruch 12,
**dadurch gekennzeichnet, dass** die Verbindungsanordnung (23) an der Überwurfmutter (21) angeordnet ist.

## Claims

1. A radiometric measuring assembly (1) having at least one radiation source (3) and a sensing unit (5) to detect radioactive radiation by means of a substantially cylindrical scintillator (7) having a markedly greater extension in an axial direction (A) than in a radial direction to generate radiation-induced flashes of light, a photosensitive element to generate an electric signal based on the flashes of light, measurement electronics to process the electric signal and a flexible cooling device (9) associated with the scintillator (7), the cooling device (9) comprising the scintillator (7) axially at least in part as well as radially and being suitably formed to guide a coolant,
**characterized in that** the cooling device (9) comprises at least a first tube (91) and the coolant is guided between an outer jacket (71) of the scintillator (7) and an inner wall (93) of the first tube (91).

2. The radiometric measuring assembly (1) according to claim 1,
**characterized in that** the first tube (91) is formed as a corrugated tube.

3. The radiometric measuring assembly (1) according to claim 2,
**characterized in that** the corrugated tube (91) is covered with a second tube (92), preferably a fabric tube.

4. The radiometric measuring assembly (1) according to one of the preceding claims,
**characterized in that** the cooling device (9) includes a first end piece (11) with a first coolant connector (13).

5. The radiometric measuring assembly (1) according to claim 4,
**characterized in that** the first end piece (11) is glued, screwed or welded to the first tube (91).

6. The radiometric measuring assembly (1) according to claim 4 or claim 5,
**characterized in that** the first end piece (11) circumferentially encloses the scintillator (7) and is attachable to the scintillator (7) by means of a sealing clamp assembly (15).

7. The radiometric measuring assembly (1) according to claim 6,
**characterized in that** the clamp assembly (15) is formed in the shape of a sleeve and includes a circumferential inner bevel (17) at an end oriented away from the first tube (91) as well as a sealing element (19) which cooperates with the inner bevel (17) and an end element (21) such that it fixes the clamp assembly (15) in the axial direction (A) and forms a seal toward the scintillator (7).

8. The radiometric measuring assembly (1) according to claim 7,
**characterized in that** the end element (21) is formed as a cap nut.

9. The radiometric measuring assembly (1) according to one of the claims 4 to 8,
**characterized in that** the cooling device (9) includes a second end piece (12) which is connectable with a housing cooling system (60) and/or a lid cooling system (61) of a housing (6) in which the photosensitive element and/or the measurement electronics are preferably arranged.

10. The radiometric measuring assembly (1) according to claim 9,
**characterized in that** the second end piece (12) is connected with the housing (6) such that the housing cooling system (60) and/or the lid cooling system (61) and the cooling device (9) form a single cooling circuit.

11. The radiometric measuring assembly (1) according to one of the claims 4 to 8,
**characterized in that** the cooling device (9) includes a second end piece (12) which has the same structure as the first end piece (11).

12. The radiometric measuring assembly (1) according to claim 11,
**characterized in that** the second end piece (12) also includes a connection assembly (23) by means of which it is connectable with the housing (6) of the measuring assembly (1) or the housing cooling system (60).

13. The radiometric measuring assembly (1) according to claim 12,
**characterized in that** the connection assembly (23) is arranged at the cap nut (21).

## Revendications

1. Dispositif de mesure radiométrique (1) comprenant au moins une source de rayonnement (3) et une unité de détection (5) pour permettre de détecter un rayonnement radioactif, un scintillateur (7) essentiellement cylindrique ayant une extension notablement plus grande dans la direction axiale (A) que dans la direction radiale, pour produire des flashes lumineux induits par le rayonnement, un élément photosensible pour produire un signal électrique en fonction des flashes lumineux, une électronique de mesure pour traiter le signal électrique et un dispositif de refroidissement flexible (9) associé au scintillateur (7) qui entoure le scintillateur (7) radialement et au moins par section axialement et est réalisé pour pouvoir transporter un agent de refroidissement,
**caractérisé en ce que**
le dispositif de refroidissement (9) comprend au moins un premier tuyau (91) et l'agent de refroidissement est transporté entre une enveloppe externe (71) du scintillateur (7) et une paroi interne (93) du premier tuyau (91).

2. Dispositif de mesure radiométrique (1), conforme à la revendication 1,
**caractérisé en ce que**
le premier tuyau (91) est réalisé sous la forme d'un tuyau ondulé.

3. Dispositif de mesure radiométrique (1) conforme à la revendication 2,
**caractérisé en ce que**
le tuyau ondulé (91) est recouvert par un second tuyau (92) de préférence un tuyau en tissu.

4. Dispositif de mesure radiométrique (1) conforme à l'une des revendications précédentes,
**caractérisé en ce que**
le dispositif de refroidissement (9) comprend une première pièce d'extrémité (11) ayant une première connexion pour l'agent de refroidissement (13).

5. Dispositif de mesure radiométrique (1) conforme à la revendication 4,
**caractérisé en ce que**
la première pièce d'extrémité (11) est collée vissée ou soudée sur le premier tuyau (91).

6. Dispositif de mesure radiométrique (1) conforme à la revendication 4 ou 5,
**caractérisé en ce que**
la première pièce d'extrémité (11) entoure le scintillateur (7) sur sa périphérie et peut être fixée sur le scintillateur (7) par un dispositif de serrage hermétique (15).

7. Dispositif de mesure radiométrique (1) conforme à la revendication 6 ou 5,
**caractérisé en ce que**
le dispositif de serrage (15) est réalisé en forme de manchon et comporte, à son extrémité située à l'opposé du premier tuyau (91) un biseau périphérique interne (17) et un élément d'étanchéité (19) qui coopère avec le biseau interne (17) et un élément d"extrémité (21) de façon à permettre la fixation du dispositif de serrage (15) en direction axiale (A) et à assurer son étanchéité avec le scintillateur (7).

8. Dispositif de mesure radiométrique (1) conforme à la revendication 7,
**caractérisé en ce que**
l'élément d'extrémité (21) est réalisé sous la forme d'un écrou d'accouplement.

9. Dispositif de mesure radiométrique (1) conforme à l'une des revendications 4 à 9,
**caractérisé en ce que**
le dispositif de refroidissement (9) comprend une seconde pièce d'extrémité (12) qui peut être reliée à un refroidissement (60) d'un boîtier (6) et/ou à un refroidissement du couvercle (61) du boîtier (6) dans lequel sont de préférence logés l'élément photosensible et/ou l'électronique de mesure.

10. Dispositif de mesure radiométrique (1) conforme à la revendication 9,
**caractérisé en ce que**
la seconde pièce d'extrémité (12) est reliée au boîtier (6) de sorte que le refroidissement de boîtier (60) et/ou le refroidissement de couvercle (61) et le dispositif de refroidissement (9) forment un circuit de refroidissement unique.

11. Dispositif de mesure radiométrique (1) conforme à l'une des revendications 4 à 8,
**caractérisé en ce que**
le dispositif de refroidissement (9) comporte une seconde pièce d'extrémité (12) ayant la même configuration que la première pièce d'extrémité (11).

12. Dispositif de mesure radiométrique (1) conforme à la revendication 11,
**caractérisé en ce que**
la seconde pièce d'extrémité (12) comporte en outre un dispositif de liaison (23) au moyen duquel elle peut être reliée au boîtier (6) du dispositif de mesure (1) ou au refroidissement de boîtier (60).

13. Dispositif de mesure radiométrique (1) conforme à la revendication 12,
**caractérisé en ce que**
le dispositif de liaison (23) est monté sur l'écrou d'accouplement (21).
